(19) Europäisches Patentamt
European Patent Office
Office européen des brevets

(11) **EP 0 667 509 B1**

(12) **EUROPÄISCHE PATENTSCHRIFT**

(45) Veröffentlichungstag und Bekanntmachung des Hinweises auf die Patenterteilung:
**14.07.1999 Patentblatt 1999/28**

(51) Int Cl.[6]: **G01F 1/68**, G01F 1/78, F02D 41/18

(21) Anmeldenummer: **95101449.7**

(22) Anmeldetag: **03.02.1995**

(54) **Temperaturkompensation bei Massenstromsensoren nach dem Prinzip des Hitzdraht-Anemometers**

Temperature compensation in mass flow sensors after the principle of a hot wire anemometer

Compensation de température pour capteurs du débit massique selon le principe d'anémomètres à fil chaud

(84) Benannte Vertragsstaaten:
**DE ES FR GB IT**

(30) Priorität: **12.02.1994 DE 4404506**

(43) Veröffentlichungstag der Anmeldung:
**16.08.1995 Patentblatt 1995/33**

(73) Patentinhaber: **DaimlerChrysler AG
70567 Stuttgart (DE)**

(72) Erfinder:
* **Bennöhr, Thomas
D-38102 Braunschweig (DE)**
* **Daetz, Michael
D-38473 Tiddische (DE)**

(56) Entgegenhaltungen:
**EP-A- 0 276 380**  **EP-A- 0 374 352**
**DE-A- 3 433 368**  **DE-A- 3 806 764**

**Beschreibung**

Die Erfindung betrifft eine Schaltungsanordnung zur Luftmassenmessung nach dem Prinzip des Hitzdraht-Anemometers, insbesondere für Kraftfahrzeuge mit einer Brennkraftmaschine.

Aus der Druckschrift DE-OS 38 02 422 ist eine solche Schaltungsanordnung bekannt, die im Prinzip in Figur 3 dargestellt ist. Diese bekannte Schaltungsanordnung besteht aus einer elektrischen Meßbrücke mit 2 Brückenzweigen, von denen der eine einen vom Luftstrom umspülten Luftstrommeßwiderstand $R_L$ in Reihe zu einem Strommeßwiderstand $R_1$ und der andere einen die Lufttemperatur erfassenden Temperaturkompensationswiderstand $R_T$, dem ein Korrekturwiderstand $R_K$ nachgeschaltet ist, in Reihe zu einem Festwiderstand $R_2$ enthalten. Bei dem Luftstrommeßwiderstand $R_L$ und dem Temperatur-Kompensationswiderstand $R_T$ handelt es sich beispielsweise um Heißfilmsensoren mit positivem Temperaturkoeffizienten, deren Temperaturverhalten übereinstimmt. Die Differenzspannung im Brückendiagonalzweig wird von einem Differenzverstärker $U_1$ erfaßt und dient dazu, den Brückenabgleich herbeizuführen.

Der nach Brückenabgleich den Strommeßwiderstand $R_1$ durchfließende Strom bzw. die nach Brückenabgleich an dem Strommeßwiderstand $R_1$ anstehende Spannung $U_M$ wird als Maß für den augenblicklichen Luftmassenstrom ausgewertet.

Die Meßbrücke wird mit Hilfe des Differenzverstärkers $U_1$ stets so geregelt, daß sich bei jedem Luftstrom und Temperaturzustand ein Brückenabgleich ergibt, d.h. der Differenzverstärker $U_1$ verändert den Strom durch den Luftstrommeßwiderstand $R_L$ so lange, bis die von dem Differenzverstärker $U_1$ erfaßte Brückendifferenzspannung zu Null wird. Dabei erwärmt sich der Luftstrommeßwiderstand $R_L$ und verändert durch sein Temperaturverhalten seinen Widerstandswert.

Die Schaltung stellt eine Konstant-Widerstandsregelung dar, bei der sich der Widerstandswert des Luftstromes-Widerstandes $R_L$ nach folgender Formel verhält:

$$R_L\,(T) = (R_T\,(T) + R_K) \cdot R_1/R_2 \qquad (1)$$

Im eingeschwungenen Zustand der Meßbrücke nach Figur 3 ist die dem Luftstrommeßwiderstand $R_L$ zugeführte Leistung $P_{se}$ gerade so groß wie die von diesem Widerstand $R_L$ an das vorbeiströmende Medium abgegebene Leistung. Die Widerstandswerte in der Meßbrücke werden so gewählt, daß sich eine vorzugsweise konstante Übertemperatur zum strömenden Medium von ca. 130 K einstellt. Hierbei bewirkt eine Änderung des Wertes des Festwiderstandes $R_2$ eine Veränderung des Übertemperaturniveaus, während Änderungen an dem Korrekturwiderstand $R_K$ die Auswirkungen der Temperaturerfassung mit dem Temperatur-Kompensationswiderstand $R_T$ beeinflussen. Der Korrekturwiderstand $R_K$ bestimmt also, ob bei steigender Medientemperatur die Übertemperatur ebenfalls ansteigt, fällt oder vorzugsweise wegen der kürzeren Reaktionszeit bei Temperaturwechseln konstant bleibt. Für den durch den Luftstrommeßwiderstand $R_L$ durchfließenden Strom $I_{se}$ gilt folgende Formel:

$$I_{se} = K_0 \cdot (P_{se}/R_L)^{\frac{1}{2}}, \qquad (2)$$

wobei $K_0$ eine Konstante darstellt. Die Ausgangsspannung $U_m$, die ein Maß für den Luftstrom darstellt, ergibt sich als Funktion des Massenstroms $(dm/dt)$ nach dem King'schen Gesetz gemäß folgender Formel:

$$U_M = K_1 + K_2 \cdot (dm/dt)^{\frac{1}{4}}, \qquad (3)$$

wobei $K_1$ und $K_2$ Konstanten sind.

Die primäre Meßgröße eines Hitzdraht - oder Heißfilm - Anemometers ist die am Luftstrommeßwiderstand $R_L$ umgesetzte Leistung. Da sich der Temperatur-Kompensationswiderstand $R_T$ mit der Medientemperaur ändert, wird sich nach obiger Gleichung (1) auch der Widerstandswert des Luftstrommeßwiderstandes $R_L$ ändern, so daß eine Konstant-Widerstandsregelung im Grunde jeweils nur für diskrete Temperaturen vorliegt. Um die am Luftstrommeßwiderstand $R_L$ umgesetzte Leistung zu erfassen, ist es daher eigentlich erforderlich, die an diesem Widerstand umgesetzte Leistung $P_{se}$ zu erfassen. Üblicherweise wird jedoch ausschließlich der Strom $I_{se}$ durch den Strommeßwiderstand $R_1$ ausgewertet, wodurch bei der Leistungsbestimmung prinzipiell ein Fehler besteht. Da jedoch als Meßgröße der Luftmassenstrom zu erfassen ist, wird dieser Fehler fast kompensiert, da Berechnungen des Wärmeübergangs-Koeffizienten Â zeigen, daß die bei gleichem Massenstrom an dem Luftstrommeßwiderstand $R_L$ umsetzbare Leistung mit der Temperatur steigt. Mit steigender Temperatur nimmt auch der Widerstandswert des Luftstrommeßwiderstandes $R_L$ zu, so daß der sich einstellende Strom $I_{se}$ tatsächlich annähernd konstant (King'sches Gesetz) ist. Es bleibt jedoch ein Restgradient bezüglich der Temperatur übrig, der im für Fahrzeuganwendungen interessanten Temperaturbereich einen Fehler zwischen 2 und 5 % bezogen auf den Meßwert verursacht.

Der Vollständigkeit halber wird auf die EP 0 276 380 A1 hingewiesen, die ebenfalls einen Massenstromsensor nach dem Prinzip des Hitzdrahtanemometers beschreibt, bei dem beheizte und unbeheizte elektrische Widerstände zu einer Brücke zusammengeschaltet werden und an deren Brückendiagonalzweig eine Differenzspannung auf einen Differenzverstärker zwecks Brückenabgleich zugeführt wird. Ein Unterschied in den Temperaturkoeffizienten des elektrischen Widerstandes der beiden temperaturabhängigen elektrischen Widerstände wird mittels eines temperaturunabhängigen Widerstandes eingestellt. Da jedoch bei Änderung dessen Widerstandswertes gleichzeitig auch die übertemperatur sich verändert, ist diese Methode der Temperaturkompensation aufwendig. Zur Vereinfachung der Temperaturkompensation wird in dieser Druckschrift vorgeschlagen, parallel zur Brücke einen variablen elektrischen Widerstand anzuordnen. Als Meßsignal zur Bestimmung des Luftmassenstromes dient der Strom, der die Summe aus dem Strom durch die Brücke und dem Strom durch den zusätzlichen Widerstand darstellt. Damit werden bei diesem bekannten Massenstromsensor nicht die Größen erfaßt, die für die am Luftstrommeßwiderstand umgesetzte Leistung relevant sind.

Der vorliegenden Erfindung liegt daher die Aufgabe zugrunde eine Schaltungsanordnung der eingangs genannten Art anzugeben, mit der in einfacher Weise eine Temperaturkompensation erzielbar ist.

Zur Lösung dieser gestellten Aufgabe wird gemäß den gekennzeichneten Merkmalen des Patentanspruches 1 die Summe der Spannungen über dem Strommeßwiderstand und der Spannung über dem Luftstrommeßwiderstand oder die Summe der Spannung über dem Strommeßwiderstand und einer Teilspannung über dem Luftstrommeßwiderstand als Maß für den Luftstrom ausgewertet.

Zur Erzeugung einer über dem Luftstrommeßwiderstand auftretenden Teilspannung wird parallel zu diesem Widerstand ein Spannungsteiler geschaltet, so daß sich die Meßspannung als Summe aus der am Strommeßwiderstand auftretenden Spannung und der an diesem Spannungsteiler auftretenden Teilspannung ergibt, wobei dieser Spannungsteiler so eingestellt wird, daß der Temperaturgradient der Teilspannung durch den Temperaturgradient des durch den Strommeßwiderstand fließenden Stromes kompensiert wird. Dabei sind die Werte der Teilwiderstände um mehrere Größenordnungen größer als der Wert des Luftstrommeßwiderstandes.

Mit einer solchen Meßbrücke wird eine hohe Meßgenauigkeit über dem maßgeblichen Temperaturbereich erreicht, wobei die Einstellung der Brücke unabhängig von der Einstellung der Temperaturkompensation ist.

Bei einer bevorzugten Weiterbildung kann der Spannungsteiler aus zwei Teilwiderständen aufgebaut sein, so daß die für die Meßspannung maßgebliche Teilspannung an dem direkt mit dem Strommeßwiderstand verbundenen Teilwiderstand auftritt.

Setzt sich dagegen die Meßspannung aus der Summe der Spannungen an dem Luftstrommeßwiderstand und dem Strommeßwiderstand zusammen und ist ferner in Reihe zum Temperatur-Kompensationswiderstand ein Korrekturwiderstand geschaltet, so werden zur Temperaturkompensation dieser Temperaturkompensationswiderstand und der Korrekturwiderstand so eingestellt, daß der Temperaturgradient der Meßspannung kompensiert wird.

Im folgenden soll die Erfindung anhand von Ausführungsbeispielen im Zusammenhang mit den Zeichnungen dargestellt und erläutert werden. Es zeigen:

Figur 1: ein Schaltbild eines ersten Ausführungsbeispiels der erfindungsgemäßen Schaltungsanordnung mit einem parallel zum Luftstrommeßwiderstand parallel geschalteten Spannungsteiler und

Figur 2 ein weiteres Ausführungsbeispiel der erfindungsgemäßen Schaltungsanordnung, bei der die Meßspannung über der Reihenschaltung aus dem Luftstrommeßwiderstand und dem Strommeßwiderstand abgegriffen wird.

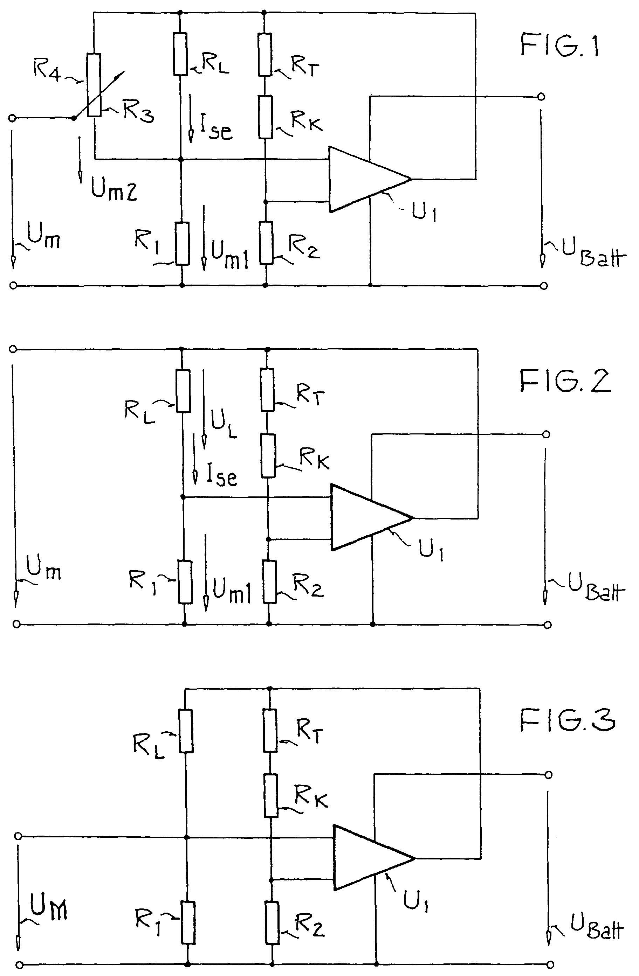

Die den Stand der Technik darstellende und schon oben beschriebene Schaltungsanordnung nach Figur 3 unterscheidet sich von derjenigen nach Figur 1 lediglich dadurch, daß parallel zum Luftstrommeßwiderstand $R_L$ ein aus zwei Widerständen $R_3$ und $R_4$ aufgebauter Spannungsteiler geschaltet ist. Der Gesamtwiderstand dieses Spannungsteilers beträgt ca. 30 kΩ, während der Widerstand des Luftstrommeßwiderstandes $R_L$ ca. 10 Ω beträgt. Das Widerstandsverhältnis der beiden Widerstände $R_L$ und $R_T$ beträgt dagegen ca. 1: 100.

Mit dieser Schaltungsanordnung wird eine vollständige Temperaturkompensation erreicht, indem der Spannungsteiler $R_3/R_4$ so eingestellt wird, daß der Temperaturgradient des Stromes $I_{se}$ den entgegengesetzten Temperaturgradienten des über dem Teilwiderstand $R_3$ des Spannungsteilers auftretenden Spannungsabfalles $U_{m2}$ kompensiert. Die Meßspannung $U_m$ setzt sich aus der Spannung $U_{m1}$ über dem Strommeßwiderstand $R_1$ und der Teilspannung $U_{m2}$ über dem Teilwiderstand $R_3$ zusammen und verhält sich nach folgender Formel:

$$U_m = K_3 \cdot (P_{se}/R_L)^{\frac{1}{2}} + K_4 \cdot (P_{se} \cdot R_L)^{\frac{1}{2}}, \qquad (4)$$

wobei $K_3$ und $K_4$ Konstanten sind. Da die Werte der Teilwiderstände $R_3$ und $R_4$ - wie an den oben genannten Werten zu erkennen ist - mehrere Größenordnungen größer sind als der Wert des Luftstrommeßwiderstandes $R_L$, erfolgt die Einstellung der Meßbrücke unabhängig von der Einstellung der Temperaturkompensation. Da sich beide Terme in der obigen Gleichung (4) grundsätzlich nach dem King'schen Gesetz verhalten, läßt sich auch diese Kombination wieder entsprechend Gleichung (3) formulieren.

Das weitere Ausführungsbeispiel nach Figur 2 zeigt eine dem Stand der Technik nach Figur 3 entsprechende Meßbrücke, bei der jedoch das Meßsignal $U_m$ nicht über dem Strommeßwiderstand $R_1$ erzeugt wird, sondern an der Reihenschaltung aus dem Strommeßwiderstand $R_1$ und dem Luftstrommeßwiderstand $R_L$ abgegriffen wird. Das Meßsignal $U_m$ ergibt sich somit als Summe aus der Spannung $U_{m1}$ über dem Strommeßwiderstand $R_1$ und der Spannung $U_L$ über dem Luftstrommeßwiderstand $R_L$. Um jedoch bei einer solchen Schaltungsanordnung eine Temperaturkompensation zu erzielen, muß auf den Vorteil einer konstanten Übertemperatur, wie dies bei der Schaltungsanordnung nach Figur 1 vorliegt, verzichtet werden. Eine Temperaturkompensation wird mit dem Kompensationswiderstand $R_K$ und dem Festwiderstand $R_2$ erzielt, indem diese so eingestellt werden, daß der Temperaturgradient der Meßspannung $U_m$ kompensiert wird. Der Vorteil dieser Schaltungsanordnung besteht darin, daß das Meßsignal $U_m$ deutlich größer als bei dem ersten beschriebenen Ausführungsbeispiel ist.

## Patentansprüche

1. Schaltungsanordnung zur Luftmassenmessung nach dem Prinzip des Hitzdraht-Anemometers, insbesondere für Kraftfahrzeuge mit einer Brennkraftmaschine, mit einer Brückenschaltung, in deren einem Brückenzweig ein vom Luftstrom umspülter Luftstrommeßwiderstand ($R_L$) in Reihe zu einem Strommeßwiderstand ($R_1$) und in deren anderem Brückenzweig ein die Lufttemperatur erfassender Temperatur-Kompensationswiderstand ($R_T$) in Reihe zu einem Festwiderstand ($R_2$) liegen, wobei die Brückendifferenzspannung im Diagonalzweig der Meßbrücke erfaßt und für den Brückenabgleich eingesetzt wird, dadurch gekennzeichnet, daß die sich nach einem Brückenabgleich als Summe aus der am Strommeßwiderstand ($R_1$) auftretenden Spannung ($U_{m1}$) und einer am Luftstrommeßwiderstand ($R_L$) auftretenden Teilspannung ($U_{m2}$) ergebende Meßspannung ($U_m$) als Maß für den Luftstrom ausgewertet wird.

2. Schaltungsanordnung zur Luftmassenmessung nach dem Prinzip des Hitzdraht-Anemometers, insbesondere für Kraftfahrzeuge mit einer Brennkraftmaschine, mit einer Brückenschaltung, in deren einem Brückenzweig ein vom Luftstrom umspülter Luftstrommeßwiderstand ($R_L$) in Reihe zu einem Strommeßwiderstand ($R_1$) und in deren anderem Brückenzweig ein die Lufttemperatur erfassender Temperatur-Kompensationswiderstand ($R_T$) in Reihe zu einem Festwiderstand ($R_2$) liegen, wobei die Brückendifferenzspannung im Diagonalzweig der Meßbrücke erfaßt und für den Brückenabgleich eingesetzt wird, dadurch gekennzeichnet, daß die sich nach einem Brückenabgleich als Summe aus der am Strommeßwiderstand ($R_1$) auftretenden Spannung ($U_{m1}$) und der am Luftstrommeßwiderstand ($R_L$) auftretenden Spannung ($U_L$) ergebende Meßspannung ($U_m$) als Maß für den Luftstrom ausgewertet wird.

3. Schaltungsanordnung nach Anspruch 1, gekennzeichnet durch folgende Merkmale:

   a) zur Erzeugung einer am Luftstrommeßwiderstand ($R_L$) auftretenden Teilspannung ($U_{m2}$) wird parallel zum Luftstrommeßwiderstand ($R_L$) ein Spannungsteiler ($R_3/R_4$) geschaltet,

   b) die Meßspannung ($U_m$) ergibt sich aus der Summe der am Strommeßwiderstand ($R_1$) auftretenden Spannung ($U_{m1}$) und einer am Spannungsteiler ($R_3/R_4$) auftretenden Teilspannung ($U_{m2}$),

   c) der Spannungsteiler ($R_3/R_4$) wird so eingestellt, daß der Temperaturgradient der Teilspannung ($U_{m2}$) durch den Temperaturgradienten des durch den Strommeßwiderstand ($R_1$) fließenden Stromes ($I_{se}$) kompensiert wird und

   d) die Widerstandswerte der Teilwiderstände ($R_3$, $R_4$) des Spannungsteilers ($R_3/R_4$) sind mehrere Größenordnungen größer als der Widerstandswert des Luftstrommeßwiderstandes ($R_L$).

4. Schaltungsanordnung nach Anspruch 3, dadurch gekennzeichnet, daß der Spannungsteiler ($R_3/R_4$) zwei Teilwiderstände ($R_3$, $R_4$) aufweist und daß die für die Meßspannung ($U_m$) maßgebliche Teilspannung ($U_{m2}$) an dem direkt mit dem Strommeßwiderstand ($R_1$) verbundenen Teilwiderstand ($R_3$) auftritt.

5. Schaltungsanordnung nach einem der vorangehenden Ansprüche, dadurch gekennzeichnet, daß in Reihe zum Temperaturkompensationswiderstand ($R_T$) ein Korrekturwiderstand ($R_K$) geschaltet ist.

## Claims

1. Circuit arrangement for obtaining air mass measurements using the hot wire anemometer principle, in particular for motor vehicles using an internal combustion engine, and comprising a bridge circuit in the one branch of which there is an air flow measuring resistance ($R_L$) round which the air stream sweeps, said resistance being in series with a current measuring resistance ($R_1$), and in the other branch of which there is a temperature compensating resistance ($R_T$) for detecting the temperature of the air, said resistance being in series with a fixed resistance ($R_2$), wherein the voltage difference of the bridge across the diagonal arm of the test bridge is determined and employed for balancing the bridge, characterised in that the test voltage ($U_m$) resulting, after the bridge is balanced, from the sum of the voltage ($U_{m1}$) across the current measuring resistance ($R_1$) and a voltage component ($U_{m2}$) across the air flow measuring resistance ($R_L$) serves as a measure for the air flow.

2. Circuit arrangement for obtaining air mass measurements using the hot wire anemometer principle, in particular for motor vehicles using an internal combustion engine, and comprising a bridge circuit in the one branch of which there is an air flow measuring resistance ($R_L$) round which the air stream sweeps, said resistance being in series with a current measuring resistance ($R_1$), and in the other branch of which there is a temperature compensating resistance ($R_T$) for detecting the temperature of the air, said resistance being in series with a fixed resistance ($R_2$), wherein the voltage difference of the bridge across the diagonal arm of the test bridge is determined and employed for balancing the bridge, characterised in that the test voltage ($U_m$) resulting, after the bridge is balanced, from the sum of the voltage ($U_{m1}$) across the current measuring resistance ($R_1$) and the voltage ($U_L$) across the air flow measuring resistance ($R_L$) serves as a measure for the air flow.

3. Circuit arrangement in accordance with Claim 1, characterised by the following features:

a) a voltage divider ($R_3/R_4$) is connected in parallel with the air flow measuring resistance ($R_L$) for producing a voltage component ($U_{m2}$) across the air flow measuring resistance ($R_L$),

b) the test voltage ($U_m$) is the result of the sum of the voltage ($U_{m1}$) across the current measuring resistance ($R_1$) and a voltage component ($U_{m2}$) across the voltage divider ($R_3/R_4$),

c) the voltage divider ($R_3/R_4$) is adjusted so that the temperature gradient of the voltage component ($U_{m2}$) is compensated by the temperature gradient of the current ($I_{se}$) flowing through the current measuring resistance ($R_1$) and

d) the resistance values of the resistance components ($R_3$, $R_4$) of the voltage divider ($R_3/R_4$) are several orders of magnitude greater than the resistance value of the air flow measuring resistance ($R_L$).

4. Circuit arrangement in accordance with Claim 3, characterised in that the voltage divider ($R_3/R_4$) comprises two resistance components ($R_3$, $R_4$) and that the voltage component ($U_{m2}$) which is decisive for the test voltage ($U_m$) occurs on the resistance component ($R_3$) directly connected to the current measuring resistance ($R_1$).

5. Circuit arrangement in accordance with any of the preceding Claims, characterised in that a correcting resistance ($R_K$) is connected in series with the temperature compensating resistance ($R_T$).

**Revendications**

1. Circuit de mesure du débit massique selon le principe de l'anémomètre à fil chaud, en particulier pour des véhicules équipés d'un moteur à combustion interne, comportant un circuit en pont, dans une branche du pont duquel se trouvent une résistance de mesure de débit massique ($R_L$) balayée par le débit d'air en série avec une résistance de mesure de courant ($R_1$) et dans l'autre branche du pont duquel se trouvent une résistance de compensation de température ($R_T$) détectant la température de l'air en série avec une résistance fixe ($R_2$), la tension différentielle du pont étant détectée dans la branche diagonale du pont de mesure et étant utilisée pour l'équilibrage du pont, caractérisé en ce que la tension de mesure ($U_m$) apparaissant après un équilibrage du pont en tant que somme de la tension ($U_{m1}$) apparaissant sur la résistance de mesure de courant ($R_1$) et d'une tension partielle ($U_{m2}$) apparaissant sur la résistance de mesure de débit massique ($R_L$) est évaluée en tant que mesure de l'écoulement d'air.

2. Circuit de mesure du courant massique selon le principe de l'anémomètre à fil chaud, en particulier pour des véhicules équipés d'un moteur à combustion interne, comportant un circuit en pont, dans une branche du pont duquel se trouvent une résistance de mesure de débit massique ($R_L$) balayée par le débit d'air en série avec une résistance de mesure de courant ($R_1$) et dans l'autre branche en pont duquel se trouvent une résistance de compensation de température ($R_T$) détectant la température de l'air en série avec une résistance fixe ($R_2$), la tension différentielle du pont dans la branche diagonale du pont de mesure détecte et est utilisée pour l'équilibrage du pont, caractérisé en ce que la tension de mesure ($U_m$) apparaissant après un équilibrage du pont est utilisée en tant que somme de la tension ($U_{m1}$) apparaissant sur la résistance de mesure de courant ($R_1$) et de la tension ($U_L$) apparaissant sur la résistance de mesure de courant massique ($R_L$) est évaluée en tant que mesure de l'écoulement d'air.

3. Circuit selon la revendication 1, caractérisé en ce que :

a) en vue de la génération d'une tension partielle ($U_{m2}$) apparaissant sur la résistance de mesure de débit massique ($R_L$) est monté, en parallèle sur la résistance de mesure de débit massique ($R_L$), un diviseur de tension ($R_3/R_4$),

b) la tension de mesure ($U_m$) s'obtient à partir de la somme ($U_{m1}$) apparaissant sur la résistance de mesure de courant ($R_1$) et d'une tension partielle ($U_{m2}$) apparaissant sur le diviseur de tension ($R_3/R_4$),

c) le diviseur de tension ($R_3/R_4$) est réglé de sorte que le gradient de température de la tension partielle ($U_{m2}$) est compensé par le gradient de température du courant ($I_{se}$) circulant à travers la résistance de mesure de courant ($R_1$) et

d) les valeurs ohmiques des résistances partielles ($R_3$, $R_4$) du diviseur de tension ($R_3/R_4$) sont de plusieurs ordres de grandeur supérieures à la valeur ohmique de la résistance de mesure de débit massique ($R_L$).

4. Circuit selon la revendication 3, caractérisé en ce que le diviseur de tension ($R_3/R_4$) présente deux résistances partielles ($R_3$, $R_4$) et en ce que la tension partielle ($U_{m2}$) déterminante pour la tension de mesure ($U_m$) apparaît sur la résistance de division ($R_3$) reliée directement à la résistance de mesure de courant ($R_1$).

5. Circuit selon l'une quelconque des revendications précédentes, caractérisé en ce qu'une résistance de correction ($R_K$) est montée en série avec la résistance de compensation de température ($R_T$).

FIG.1

FIG.2

FIG.3